# EUROPÄISCHE PATENTANMELDUNG

(11) **EP 2 008 912 A2**
(43) Veröffentlichungstag der Anmeldung: **31.12.2008**
(21) Anmeldenummer: 08104790.4
(22) Anmeldetag: 14.06.2007
(51) Int. Cl.: B62D 3/12

(54) **Lenkgetriebe für ein Fahrzeug**

(30) Priorität: 24.06.2006 DE 102006029041; 12.10.2006 DE 102006048304
(62) Teilanmeldung aus: 07110277.6
(71) Anmelder: ZF-Lenksysteme GmbH, 73527 Schwäbisch Gmünd (DE)
(72) Erfinder: Brenner, Alfred, 73540, Heubach (DE); Eisenhuth, Andreas, 73529, Schwäbisch Gmünd (DE)

(57) **Zusammenfassung**

Ein Lenkgetriebe für ein Fahrzeug mit einem sich mit der Lenkraddrehung ändernden Übersetzungsverhältnis umfasst ein Lenkritzel, das mit einer Lenkzahnstange kämmt, wobei die Zahnstangenbewegung auf die zu lenkenden Räder übertragbar ist. Das lenkritzel und/oder die lenkzahnstange ist mit einer Schrägverzahnung versehen.

## Beschreibung

Die Erfindung bezieht sich auf ein Lenkgetriebe für ein Fahrzeug mit einem sich mit der Lenkradumdrehung ändernden Übersetzungsverhältnis, bei dem ein Lenkritzel mit einer Lenkzahnstange kämmt und die Zahnstangebewegung auf die zu lenkenden Räder übertragbar ist.

In der DE-AS 11 55 987 wird ein Lenkgetriebe beschrieben, bei dem ein von einer Lenkradwelle angetriebenes Lenkritzel mit einer Lenkzahnstange kämmt, deren Bewegung auf die zu lenkenden Räder übertragen wird. Das im Querschnitt runde Lenkritzel ist exzentrisch gelagert, so dass sich bei einer Drehung des Lenkritzels der Abstand zwischen der Drehachse und dem Außenradius des Lenkritzels im Bereich des Eingriffes mit der Zahnstange ändert. Durch diese Abstandsänderung wird eine Hebeländerung erreicht, wodurch sich auch das Übersetzungsverhältnis ändert, wobei ein kleinerer Abstand einhergeht mit einem kleineren Übersetzungsverhältnis und ein größerer Abstand mit einem größeren Übersetzungsverhältnis.

In der Mittelstellung des Lenkrades ist der Abstand zwischen der Drehachse und dem Wälzkreisdurchmesser der in Eingriff befindlichen Zähne am kleinsten, so dass Lenkwinkeländerungen sich auch nur verhältnismäßig gering auswirken. Mit zunehmender Umdrehung vergrößert sich dagegen das Übersetzungsverhältnis, so dass bereits verhältnismäßig geringe Lenkwinkeländerungen zu größeren Änderungen in der Radstellung führen, was insbesondere beim Einparken Vorteile bringt.

Dieses stetig ansteigende Übersetzungsverhältnis wird allerdings nur bis zu einem Lenkwinkeleinschlag von 180° erreicht. Bei einem darüber hinausgehenden Lenkwinkeleinschlag verringert sich dagegen der Abstand zwischen Drehachse und in Eingriff befindlichen Zähnen wieder, so dass auch das Übersetzungsverhältnis wieder zurückgeht. Diese Änderung im Übersetzungsverhältnis bei einem Überschreiten des Lenkwinkeleinschlages von 180° kann vom Fahrer als unangenehm empfunden werden.

Aus der US 4,444,070 ist es bekannt, das Übersetzungsverhältnis über eine Veränderung der Verzahnungsgeometrie von Lenkritzel und Lenkzahnstange zu beeinflussen. Hierfür wird die Form der Zähne auf der Lenkzahnstange verändert, wodurch sich der Wälzkreisdurchmesser des in Eingriff befindlichen Lenkritzels und damit auch das Übersetzungsverhältnis ändert.

Aus der WO 2006/079492 A1 ist ein Lenkgetriebe für ein Fahrzeug bekannt, dessen Lenkritzel als ebene Spirale ausgebildet ist, derart, dass die Zähne des Lenkritzels entlang einer Kurve mit sich kontinuierlich änderndem Krümmungsradius angeordnet sind, der über einen Winkelbereich von mehr als 90° monoton ansteigt. Der Abstand zwischen der Drehachse des Lenkritzels und den Zähnen steigt somit - in einer Drehrichtung gesehen - ebenfalls kontinuierlich an. Diesem ansteigenden Radius wird durch eine komplementäre Form der Zahnstange Rechnung getragen. Der mit zunehmendem Drehwinkel größer werdende Abstand zwischen der Drehachse und dem Eingriff zwischen den Zähnen von Lenkritzel und Lenkzahnstange hat ein größer werdendes Übersetzungsverhältnis zur Folge, so dass sich mit zunehmendem Lenkradeinschlag ein größerer Lenkwinkel an den Rädern einstellt.

Die JP 2006-137256 A offenbart ein exzentrisch gelagertes Lenkritzel auf einer Lenkwelle, das mit einer entsprechenden Kontur auf der Lenkzahnstange kämmt. Das Ritzel selbst besitzt einen kreisförmigen Grundquerschnitt, so dass bezogen auf die Drehachse bei einem vollständigen Umlauf mit jeder Winkeländerung auch eine Änderung des für die Drehmomentübertragung wirksamen Abstandes zur Drehachse einhergeht. Hierbei werden sämtliche Abstände zwischen dem minimalen und dem maximalen Abstand durchschritten.

Der Erfindung liegt die Aufgabe zugrunde, mit einfachen konstruktiven Maßnahmen das Übersetzungsverhältnis in Lenkgetrieben für Fahrzeuge variabel einzustellen. Das Lenkgetriebe soll insbesondere kompakt ausgeführt sein und zweckmäßig auch bei Lenkradeinschlägen größer als +/- 180° ein kontinuierliches Übersetzungsverhältnis ermöglichen.

Diese Aufgabe wird erfindungsgemäß mit den Merkmalen des Anspruches 1 gelöst. Die Unteransprüche geben zweckmäßige Weiterbildungen an.

Gemäß der Erfindung ist vorgesehen, dass die Änderung des Übersetzungsverhältnisses durch verschiedene Winkelabschnitte auf dem Lenkritzel zustande kommt, in denen sich der Abstand zwischen Drehachse und den im Eingriff befindlichen Zähnen entweder ändert oder gleich bleibt oder sich in die Gegenrichtung ändert. Dies bedeutet, dass der Krümmungsradius eines Lenkritzels in einer Drehrichtung gesehen nicht streng monoton, sondern nur monoton ansteigt oder gegebenenfalls auch wieder abfallende Winkelabschnitte aufweist. Auf diese Weise kann das Übersetzungsverhältnis zusätzlich variiert werden.

Weitere Vorteile und zweckmäßige Ausführungen sind den weiteren Ansprüchen, der Figurenbeschreibung und den Zeichnungen zu entnehmen. Es zeigen:
- Fig. 1: eine schematische Darstellung eines Lenksystems in einem Fahrzeug, bei dem einem Lenkgetriebe ein Überlagerungsgetriebe vorgeschaltet ist, wobei das Lenkgetriebe gemäß den nachfolgenden Figuren ausgeführt ist,
- Fig. 2: eine schematische Darstellung in Seitenansicht und in Draufsicht auf ein Lenkgetriebe mit Lenkritzel und Lenkzahnstange, wobei jeweils zwei Lenkritzel und zwei Lenkzahnstangen vorgesehen sind und der Krümmungsradius der Lenkritzel in einer Drehrichtung monoton ansteigt, und wobei sowohl die Verzahnung des Lenkritzels als auch die Verzahnung der Lenkzahnstange mit einer Schrägverzahnung versehen sind,
- Fig. 3: ein Lenkgetriebe in einer weiteren Ausführung, bei der die Lenkritzel jeweils mit monoton steigendem Krümmungsradius ausgebildet sind und zusätzlich die Verzahnung der Lenkzahnstange eine sich ändernde Zahngeometrie aufweist,
- Fig. 4a und 4b: jeweils eine Ansicht eines Lenkgetriebes mit Lenkritzel und Lenkzahnstange in unterschiedlichen Lenkradwinkelpositionen, wobei der Abstand der Lenkzahnstang in Bezug auf das Lenkritzel veränderlich einstellbar ist.

In den Figuren sind gleiche Bauteile mit den gleichen Bezugszeichen versehen.

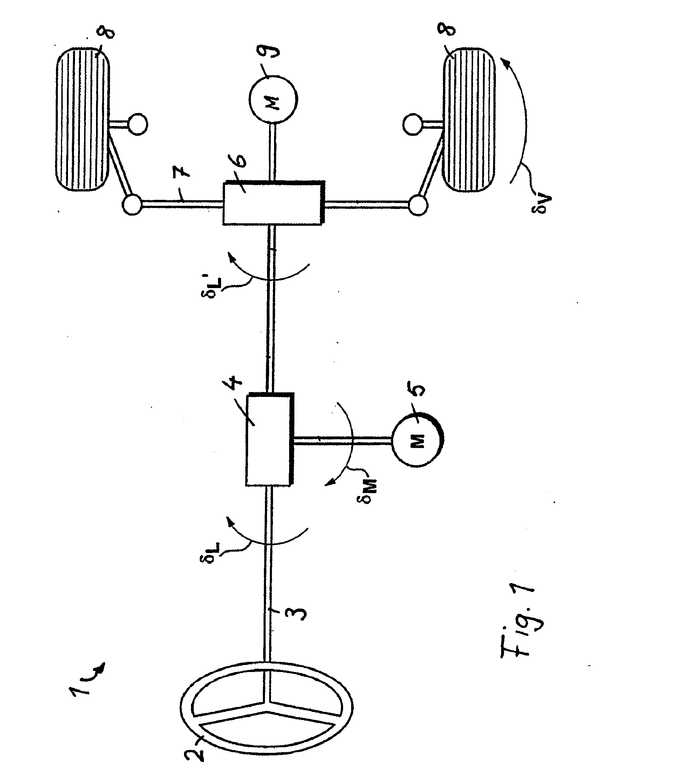

Bei dem in Fig. 1 dargestellten Lenksystem 1 wird vom Fahrer über ein Lenkrad 2 ein Lenkwinkel δ_{L} eingestellt, der über eine Lenkwelle 3 und ein Lenkgetriebe 6 auf die lenkbaren Vorderräder 8 übertragen wird, in denen sich ein Radlenkwinkel δ_{V} einstellt.

Die Lenkwelle 3 ist zweigeteilt mit einem zwischengelagerten Überlagerungsgetriebe 4. Dem Überlagerungsgetriebe 4 ist ein Stellmotor 5 zugeordnet, bei dessen Betätigung ein Zusatzdrehwinkel δ_{M} erzeugt wird, der dem Lenkwinkel δ_{L} zu einem resultierenden Lenkwinkel δ_{L}' überlagert wird, welcher dem Lenkgetriebe 6 als Lenkritzelwinkel zugeführt wird. Ohne Betätigung des Stellmotors 5 wird auch kein Zusatzdrehwinkel δ_{M} erzeugt, so dass der resultierende Lenkwinkel δ_{L}' identisch ist mit dem vom Fahrer vorgegebenen Lenkwinkel δ_{L}. Gegebenenfalls kann auf das Überlagerungsgetriebe 4 auch vollständig verzichtet werden.

Dem Lenkgetriebe 6 ist ein Servomotor 9 zur Unterstützung und Reduzierung des vom Fahrer aufzubringenden Lenkmomentes zugeordnet. Die Lenkbewegung wird über eine Lenkzahnstange 7, die vom Lenkgetriebe 6 beaufschlagt wird, auf die Vorderräder 8 übertragen. Anstelle eines elektrischen Servomotors kann dem Lenkgetriebe auch ein Hydraulikzylinder zugeordnet sein. Das Lenkgetriebe 6 umfasst ein Lenkritzel, das in einem Lenkgehäuse des Lenkgetriebes angeordnet und drehfest mit der Lenkwelle 3 gekoppelt ist, und die Lenkzahnstange 7.

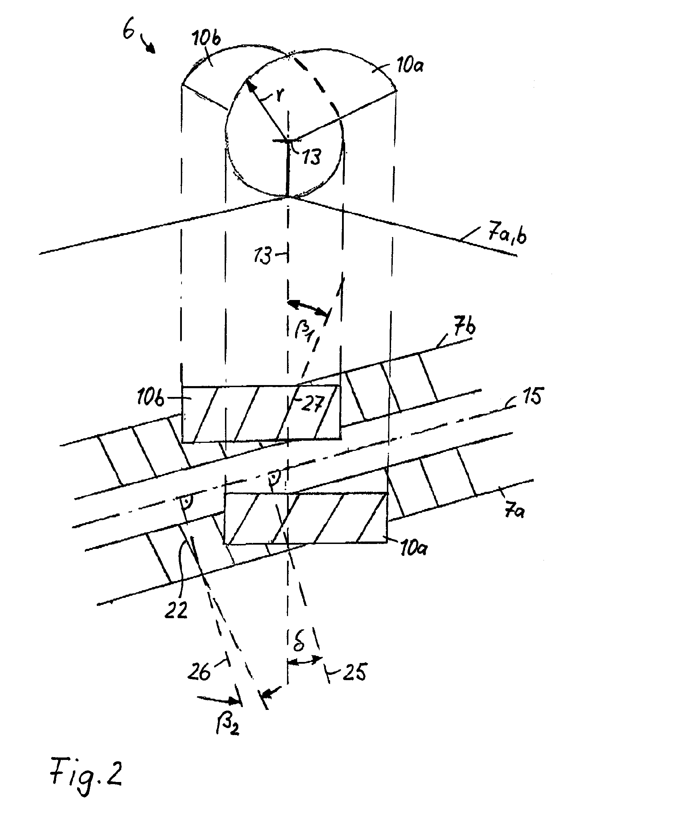

In Fig. 2 ist ein Ausführungsbeispiel eines Lenkgetriebes 6 mit zwei parallel verlaufenden Lenkzahnstangen 7a und 7b sowie zwei den Lenkzahnstangen zugeordneten Lenkritzeln 10a und 10b dargestellt. Jedes Lenkritzel 10a, 10b erstreckt sich über einen Winkelbereich größer als 180°, im Ausführungsbeispiel etwa 240°. Der Krümmungsradius r nimmt, in einer Drehrichtung gesehen, monoton zu, was bedeutet, dass in dieser Drehrichtung der Krümmungsradius permanent anwächst oder gleich bleibt. Es kann zweckmäßig sein, den Krümmungsradius r streng monoton, also kontinuierlich anwachsen zu lassen. Möglich ist aber auch eine Ausführung mit wechselnden Krümmungsradien, die sich in einer Drehrichtung gesehen auch verringern können und anschließend wieder ansteigen; ein derartiges Lenkritzel weist Dellen in seiner Oberflächenkontur auf. An der Außenkontur des Lenkritzels befindet sich die Verzahnung, die mit einer entsprechenden Verzahnung auf der zugeordneten Seite der Lenkzahnstange 7a bzw. 7b kämmt.

Zwei Lenkritzel 10a und 10b vorzusehen, hat den Vorteil, dass sich die Winkelbereiche, welche von jedem Lenkritzel überdeckt werden, zumindest teilweise addieren. Zwar überschneiden sich im Ausführungsbeispiel die Winkelbereiche jedes Lenkritzels 10a bzw. 10b, jedoch liegt auch jeweils ein Lenkwinkelbereich außerhalb des Überschneidungswinkelbereiches. Im Ausführungsbeispiel ergibt sich dadurch ein Gesamt-Lenkwinkelbereich größer als 360°.

Ein weiterer Vorteil, zwei Lenkritzel 10a und 10b vorzusehen, liegt darin, dass die Winkelbereiche eines jeden Lenkritzels mit den sich ändernden Krümmungsradien in sinnvoller Weise miteinander kombiniert werden können. So ist im Ausführungsbeispiel vorgesehen, dass der Krümmungsradius r in Richtung des jeweils außen liegenden Lenkwinkelabschnittes hin ansteigt. Dies ergibt in der Kombination beider Lenkritzel einen in Richtung der sich gegenüberliegenden, äußeren Lenkwinkelabschnitte hin ansteigenden Krümmungsradius mit entsprechend größer werdendem Übersetzungsverhältnis, wohingegen im Bereich der Mittellage ein kleinerer Krümmungsradius r mit entsprechend kleinerem Übersetzungsverhältnis anliegt. Der Krümmungsradius r bezeichnet den Abstand zwischen der Ritzelachse 13 und der Außenverzahnung, insbesondere dem Wälzkreisdurchmesser des jeweiligen Lenkritzels.

Es kann zweckmäßig sein, innerhalb des sich überdeckenden Lenkwinkelbereiches der beiden Lenkritzel 10a und 10b den Krümmungsradius konstant zu halten, also die Lenkritzel in diesem Winkelabschnitt kreisförmig auszubilden.

Dem sich ändernden Krümmungsradius r wird durch eine entsprechende, komplementäre Form der Lenkzahnstangen 7a und 7b Rechnung getragen. Wie der oberen Bildhälfte von Fig. 2 zu entnehmen, ist die Kontur im Bereich der Verzahnung der Lenkzahnstangen 7a bzw. 7b in Seitenansicht dreieckförmig, wobei die Mittellage den höchsten Punkt markiert, von dem ausgehend nach links und rechts die Flanken geradlinig abfallen. Es handelt sich hierbei um eine Flankenkontur der Lenkzahnstange, die auf eine logarithmische Spiralform der Lenkritzel angepasst ist. Möglich ist aber auch eine sonstige Spiralform der Lenkritzel mit entsprechend angepasster Kontur der Lenkzahnstange.

Des Weiteren ist vorgesehen, dass sowohl die beiden Lenkritzel 10a und 10b als auch die beiden Lenkzahnstangen 7a und 7b jeweils mit einer Schrägverzahnung versehen sind. Bei der Schrägverzahnung weist die Verzahnung an den Lenkritzeln 10a bzw. 10b zwischen den Zahnflanken 27 der Zähne und der Ritzelachse 13 einen Schrägungswinkel β₁ auf. Der Schrägungswinkel kennzeichnet die Abweichung der Zahnrichtung - also der Zahnflanken 27 - von der Senkrechten zur Ebene durch die Verzahnung des Lenkritzels, wobei die Senkrechte mit der Drehachse 13 der Lenkritzel zusammenfällt.

Ein entsprechender Schrägungswinkel β₂ besteht zwischen den Zahnflanken 22 an den Zähnen der Lenkzahnstangen 7a und 7b und einer Orthogonalen 26 zur Zahnstangenlängsachse 15. Die schräg verzahnten Lenkritzel 10a und 10b werden zweckmäßigerweise durch Wälzstoßen mit Hobelkamm hergestellt.

Außerdem stehen die Lenkzahnstangen 7a und 7b unter einem Gehäusewinkel δ im Lenkgetriebe, wobei der Gehäusewinkel δ die Abweichung zwischen der Ritzelachse 13 und einer Orthogonalen 25 zur Zahnstangenlängsachse 15 bezeichnet.

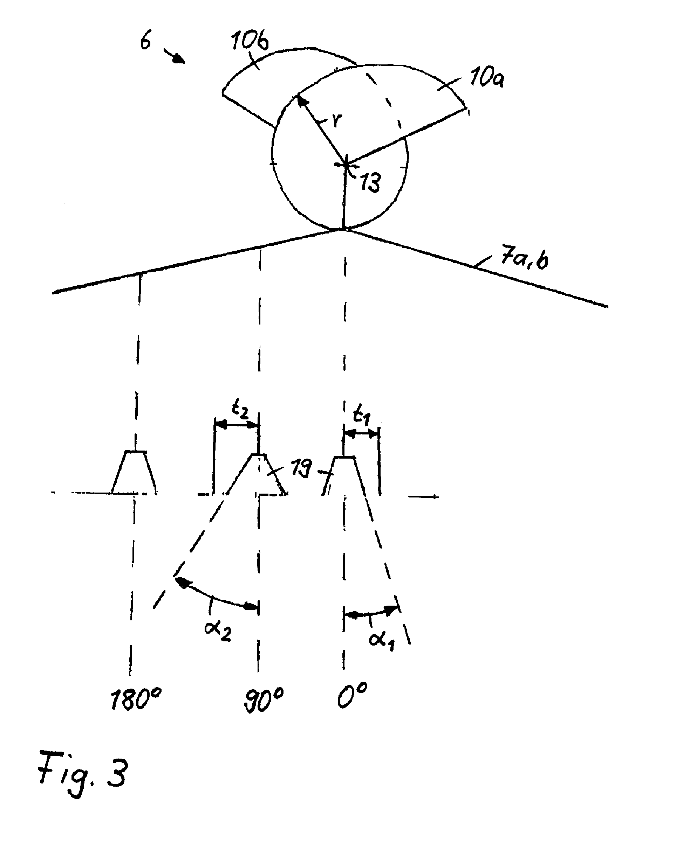

In Fig. 3 ist ein weiteres Ausführungsbeispiel eines Lenkgetriebes 6 dargestellt. Wie beim vorangegangenen Ausführungsbeispiel sind zwei spiralförmige Lenkritzel 10a und 10b vorgesehen, denen jeweils eine Lenkzahnstange 7a, 7b zugeordnet ist. Das Übersetzungsverhältnis wird im Ausführungsbeispiel nach Fig. 3 aber nicht allein über den sich ändernden Krümmungsradius r, also den Abstand zwischen der Ritzelachse 13 und dem Außenradius im Bereich des Eingriffes zwischen den Verzahnungen von Lenkritzel und Lenkzahnstange bestimmt, sondern darüber hinaus auch über eine veränderliche Verzahnungsgeometrie in den Lenkzahnstangen 7a und 7b. Die Verzahnungsgeometrie der Lenkzahnstangen ändert sich je nach aktueller Position. Verdeutlicht ist dies anhand zweier Zähne 19 in der Verzahnung der Lenkzahnstangen, die im Winkelbereich 0° und im Winkelbereich 90°, bezogen auf die Abwälzung des Lenkritzels 10a bzw. 10b, angeordnet sind. Die Teilung t₁ ist in der Mittellage, also bei einem Lenkwinkel von 0°, am kleinsten. Demgegenüber nimmt die Teilung mit zunehmendem Lenkwinkel zu, was anhand der Teilung t₂ bei einem Lenkwinkel von 90° dargestellt ist, wobei die Teilung t₂ größer ist als die Teilung t₁. Entsprechend ändert sich auch das Übersetzungsverhältnis. Zusätzlich zu der Teilung t₁ bzw. t₂ ändert sich auch der zugehörige Eingriffswinkel α₁ bzw. α₂ am jeweils betreffenden Zahn 19, wobei mit dem Eingriffswinkel α der Winkel zwischen der Orthogonalen zur Längsachse der Zahnstange und der seitlichen Zahnflanke des betreffenden Zahnes bezeichnet ist. Zur kleineren Teilung t₁ gehört ein kleinerer Eingriffswinkel α₁, dementsprechend ist der größeren Teilung t₂ auch ein größerer Eingriffswinkel α₂ zugeordnet.

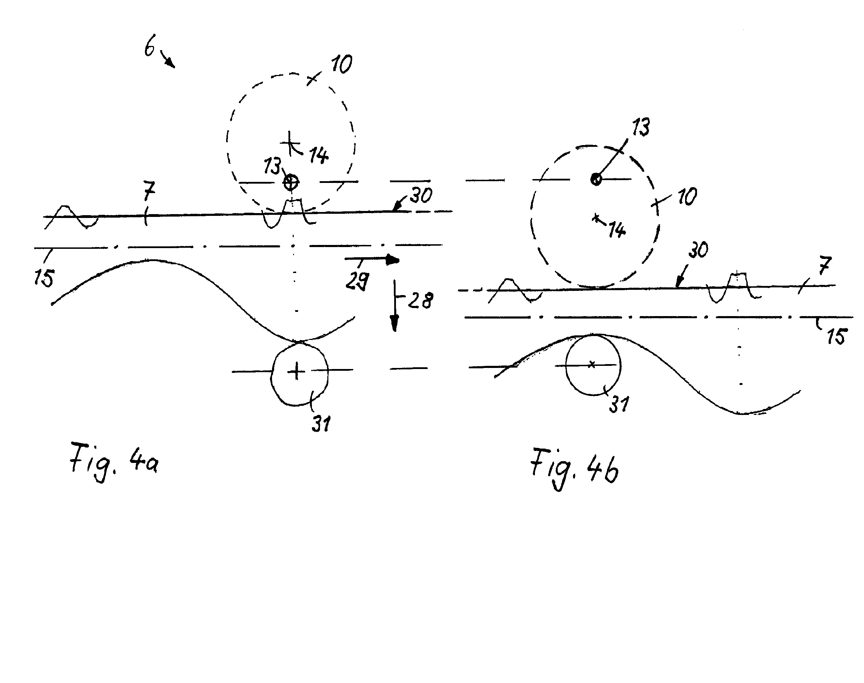

In den Figuren 4a und 4b ist noch ein weiteres Ausführungsbeispiel eines Lenkgetriebes 6 dargestellt. Das Lenkritzel 10 besitzt einen runden Querschnitt, es ist aber exzentrisch gelagert, derart, dass die Ritzelachse 13 exzentrisch zum Mittelpunkt 14 des Lenkritzels 10 verläuft. Die sich daraus ergebende exzentrische Drehbewegung des Lenkritzels 10 wird aber nicht durch eine komplementäre Kontur in der Verzahnung in der Lenkzahnstange 7 ausgeglichen, sondern durch eine Ausweichbewegung der Lenkzahnstange 7 in Pfeilrichtung 28, also vertikal zur Längsachse 15 der Lenkzahnstange. Dies hat den Vorteil, dass die Kontur 30, an der die Verzahnung der Lenkzahnstange 7 ausgebildet ist, eben und geradlinig ausgeführt werden kann, was eine erheblich vereinfachte Herstellung der Lenkzahnstange ermöglicht. Die Bewegung der Lenkzahnstange 27 vertikal zur Längsachse 15 gemäß Pfeilrichtung 28 wird der axialen Bewegung der Lenkzahnstange gemäß Pfeilrichtung 29 überlagert. Verdeutlicht ist die Bewegung gemäß Pfeilrichtung 28 in einem Vergleich zwischen den Figuren 4a und 4b, die eine Lenkwinkelumdrehung von 180° des Lenkritzels 10 darstellen. Aufgrund der exzentrischen Lagerung des Lenkritzels 10 bewegt sich die in Eingriff befindliche Verzahnung am Lenkritzel nach unten in Richtung der Lenkzahnstange 7, die gemäß Pfeilrichtung 28 eine entsprechende Ausweichbewegung vertikal zur Längsachse 15 ausführt.

Auf der der Verzahnung gegenüberliegenden Seite besitzt die Lenkzahnstange 7 eine nicht-geradlinige Kontur mit einem komplementären Verlauf zur Änderung des Abstandes zwischen Lenkritzelachse 13 und der in Eingriff befindlichen Verzahnung am Lenkritzel. Abgestützt ist die Lenkzahnstange 7 auf dieser Seite über eine Rolle 31, die gegebenenfalls auch als Zahnrad ausgebildet sein kann.

### Bezugszeichenliste

- 1: Lenksystem
- 2: Lenkrad
- 3: Lenkwelle
- 4: Überlagerungsgetriebe
- 5: Stellmotor
- 6: Lenkgetriebe
- 7: Lenkzahnstange
- 8: Vorderrad
- 9: Servomotor
- 10: Lenkritzel
- 11:
- 12:
- 13: Ritzelachse
- 14: Mittelpunkt
- 15: Zahnstangenlängsachse
- 16:
- 17:
- 18:
- 19: Zahn
- 20:
- 21:
- 22: Zahnflanke
- 25: Orthogonale
- 26: Orthogonale
- 27: Zahnflanke
- 28: Pfeilrichtung
- 29: Pfeilrichtung
- 30: Kontur
- 31: Rolle

- δ_{L}: Lenkwinkel
- δ_{M}: Zusatzdrehwinkel
- δ_{V}: Radlenkwinkel
- δ: Gehäusewinkel
- β₁: Schrägungswinkel
- β₂: Schrägungswinkel
- r: Krümmungsradius
- t₁: Teilung
- t₂: Teilung
- α₁: Eingriffswinkel
- α₂: Eingriffswinkel

## Patentansprüche

1. Lenkgetriebe für ein Fahrzeug mit einem sich mit der Lenkraddrehung ändernden Übersetzungsverhältnis, bei dem ein Lenkritzel (10) mit einer Lenkzahnstange (7) kämmt und die Zahnstangenbewegung auf die zu lenkenden Räder (8) übertragbar ist, wobei der Abstand zwischen der Drehachse (13) und dem Außenradius des Lenkritzels (10) veränderlich einstellbar ist,
**dadurch gekennzeichnet,**
**dass** das Lenkritzel (10) in einer Drehrichtung gesehen Winkelabschnitte sowohl mit ansteigendem Abstand (r) als auch mit zumindest gleich bleibendem Abstand (r) zwischen der Drehachse (13) und dem Außenradius des Lenkritzels (10) aufweist.

2. Lenkgetriebe nach Anspruch 1,
**dadurch gekennzeichnet,**
**dass** das Lenkritzel (10) spiralförmig ausgebildet ist.

3. Lenkgetriebe nach Anspruch 1 oder 2,
**dadurch gekennzeichnet,**
**dass** das Lenkritzel (10) in einer Drehrichtung gesehen Winkelabschnitte sowohl mit ansteigendem Abstand (r) als auch mit kleiner werdendem Abstand (r) zwischen der Drehachse (13) und dem Außenradius des Lenkritzels (10) aufweist.

4. Lenkgetriebe nach einem der Ansprüche 1 bis 3,
**dadurch gekennzeichnet,**
**dass** das Lenkritzel (10) und/oder die Lenkzahnstange (7) mit einer Schrägverzahnung versehen ist.

5. Lenkgetriebe nach Anspruch 4,
**dadurch gekennzeichnet,**
**dass** das Lenkritzel (10) und die Lenkzahnstange (7) unter einem Gehäusewinkel (δ) zueinander stehen.

6. Lenkgetriebe nach Anspruch 4 oder 5,
**dadurch gekennzeichnet,**
**dass** zwei drehfest gekoppelte Lenkritzel (10a, 10b) vorgesehen sind, die unterschiedliche Winkelbereiche abdecken.

7. Lenkgetriebe nach Anspruch 6,
**dadurch gekennzeichnet,**
**dass** zwei parallele Lenkzahnstangen (7a, 7b) vorgesehen sind, die jeweils einem Lenkritzel (10a, 10b) zugeordnet sind.

8. Lenkgetriebe nach einem der Ansprüche 4 bis 7,
**dadurch gekennzeichnet,**
**dass** sich die Verzahnungsgeometrie am Lenkritzel (10) und/oder der Lenkzahnstange (7) als Funktion des Lenkwinkels ändert.

9. Lenkgetriebe nach Anspruch 8,
**dadurch gekennzeichnet,**
**dass** sich der Schrägungswinkel (β₁, β₂) als Funktion des Lenkwinkels ändert.

10. Lenkgetriebe nach Anspruch 8 oder 9,
**dadurch gekennzeichnet,**
**dass** sich die Verzahnungsgeometrie an der Lenkzahnstange (7) ändert und die Verzahnungsgeometrie am Lenkritzel (10) konstant bleibt.

11. Lenkgetriebe nach einem der Ansprüche 1 bis 10,
**dadurch gekennzeichnet,**
**dass** der Abstand der Lenkzahnstange (7) relativ zum Lenkritzel (10) - orthogonal zur Zahnstangenlängsachse (15) gesehen - als Funktion des Lenkwinkels veränderlich einstellbar ist.

12. Lenkgetriebe nach Anspruch 11,
**dadurch gekennzeichnet,**
**dass** die Position des Lenkritzels (10) unveränderlich ist und das Lenkritzel (10) ausschließlich eine Drehbewegung um seine Drehachse (13) ausführen kann.

13. Lenkgetriebe nach Anspruch 11 oder 12,
**dadurch gekennzeichnet,**
**dass** die Lenkzahnstange (7) auf der dem Lenkritzel (10) abgewandten Seite auf einer ortsfest angeordneten, drehbar gelagerten Rolle (31) abrollt.

14. Lenkgetriebe nach einem der Ansprüche 11 bis 13,
**dadurch gekennzeichnet,**
**dass** die Verzahnung an der Lenkzahnstange (7) eben bzw. geradlinig ausgeführt ist.

15. Lenkgetriebe nach einem der Ansprüche 1 bis 14,
**dadurch gekennzeichnet,**
**dass** das Lenkritzel (10) als räumliche Ritzelspirale ausgebildet ist, deren Verzahnung sich über einen definierten Winkelbereich spiralförmig um eine Längsachse mit einer Richtungskomponente in Achslängsrichtung erstreckt.

16. Lenkgetriebe nach Anspruch 15,
**dadurch gekennzeichnet,**
**dass** sich die Verzahnung am Lenkritzel (10) über einen Winkelbereich größer als 360° erstreckt.

17. Lenkgetriebe nach Anspruch 15 oder 16,
**dadurch gekennzeichnet,**
**dass** der radiale Abstand (r) zwischen der Verzahnung und der Längsachse des Lenkritzels (10) in verschiedenen Achsabschnitten des Lenkritzels (10) unterschiedlich groß ist.

18. Lenkgetriebe nach Anspruch 17,
**dadurch gekennzeichnet,**
**dass** der Abstand (r) zwischen der Drehachse (13) und dem Außenradius des Lenkritzels (10) in mindestens einem außen liegenden Winkelabschnitt am größten ist.
